Europäisches Patentamt

European Patent Office

Office européen des brevets

(11) Veröffentlichungsnummer: **0 291 902 B1**

(12) **EUROPÄISCHE PATENTSCHRIFT**

(45) Veröffentlichungstag der Patentschrift: **03.07.91**

(51) Int. Cl.⁵: **F01L 1/04**

(21) Anmeldenummer: **88107798.6**

(22) Anmeldetag: **14.05.88**

(54) **Nockenwelle zur Steuerung von Ventilen bei Verbrennungskraftmaschinen und Verfahren zu ihrer Herstellung.**

(30) Priorität: **22.05.87 DE 3717190**

(43) Veröffentlichungstag der Anmeldung:
**23.11.88 Patentblatt 88/47**

(45) Bekanntmachung des Hinweises auf die
Patenterteilung:
**03.07.91 Patentblatt 91/27**

(84) Benannte Vertragsstaaten:
**CH ES FR GB IT LI SE**

(56) Entgegenhaltungen:
**DE-A- 2 159 264**
**DE-A- 3 321 846**
**US-A- 4 236 495**

**PATENT ABSTRACTS OF JAPAN, Band 9, Nr. 290 (M-430)[2013], 16. November 1985; & JP-A-60 129 464 (RIKEN K.K.) 10-07-1985**

(73) Patentinhaber: **Etablissement Supervis**
**Altenbachstrasse 17**
**FL-9490 Vaduz(LI)**

(72) Erfinder: **Matt, Lukas, Dipl.-Ing.**
**Flux 555**
**FL-9492 Eschen(LI)**

(74) Vertreter: **Hefel, Herbert, Dipl.-Ing.**
**Egelseestrasse 65a**
**A-6800 Feldkirch-Tosters(AT)**

## Beschreibung

Die Erfindung bezieht sich auf eine Nockenwelle nach dem Oberbegriff des Patentanspruches 1 und ein Verfahren zu ihrer Herstellung.

Nockenwellen, bei welchen die Nocken und die Welle getrennt gefertigt und dann zu einer baulichen Einheit zusammengefügt werden, sind bekannt. Bei einer bekannten Konstruktion dieser Art (DE-OS 28 38 995 und 33 21 846) ist die Welle mit mehreren axial verlaufenden Nuten versehen und die Bohrung des Nockens besitzt dazu einen radialen Vorsprung, der in diese Nut eingreift, wobei die Bohrung des Nockens die Welle mit Spiel umfaßt, dabei jedoch ist der erwähnte Vorsprung in seiner radialen Erstreckung so groß bemessen, daß Nocken und Wellen unter Reibungsschluß zusammenfügbar sind und ineinander in Eingriff stehen. Der infolge des erwähnten Spieles vorhandene Spalt wird nach dem Zusammenfügen von Nocken und Welle von außen her mit Hartlot gefüllt. Umfangsseitig sind dabei auf der Welle so viel Nuten angebracht wie es der Nockenphasenlage für den jeweiligen Einsatzzweck entspricht. Diese Konstruktion ist insofern nicht zweckmäßig, da es eines aufwendigen Arbeitsvorganges bedarf, die Nuten auf der Welle positionsgerecht zu fertigen. Diese Nuten müssen sehr genau gefertigt sein, sie müssen, was ihre Winkellage betrifft, sehr exakt positioniert sein.

Ferner ist bekannt (DE-OS 32 27 693), auf eine fertig bearbeitete Hohlwelle die ebenfalls fertig bearbeiteten Nocken positionsrichtig aufzuschieben und dann zur verdrehsicheren Verbindung zwischen Nocken und Welle die Hohlwelle von innen her auszuweiten, um so einen Preßsitz zwischen Hohlwelle und den einzelnen Nocken zu erzielen. Zur Erhöhung des Preßverbandes ist hier die Hohlwelle mit Kunststoffmaterial gefüllt und durch Einpressen des Kunststoffmaterials zu einem tragenden Verbundteil ausgebildet. Der zum Aufweiten der Hohlwelle erforderliche Druck wird beim Einpressen der Kunststoffmasse erzeugt. Abgesehen davon, daß dieses Verfahren sehr aufwendig ist, sind die auf die Ausnehmungen des Nockens einwirkenden Spannungen infolge des hier notwendigen Preßsitzes außerordentlich groß, denn die Nocken werden hier auf der Welle ausschließlich reibungsschlüssig gehalten, so daß hier keine durch Sintern hergestellte Nocken verwendet werden können, da die gesinterten Nocken die hier auftretenden Belastungsspannungen nicht auf die Dauer ohne Schaden zu erleiden aufnehmen können; eventuell sind geschmiedete oder gewalzte Nocken geeignet, die hier auftretenden Spannungen ohne Beeinträchtigung ihrer Lebensdauer zu ertragen. Nocken auf diese Weise herzustellen (schmieden oder walzen), ist aber eine weitere Erhöhung des Herstellungsaufwandes. In analoger Weise ist auch die Nockenwelle nach der DE-OS 25 46 802 hergestellt, die ebenfalls eine Hohlwelle aufweist. Auch diese Hohlwelle wird abschnittsweise aufgeweitet, in dem ein dem Innendurchmesser der Hohlwelle entsprechender Gummistab eingeschoben und der von der gegenüberliegenden Seite der Hohlwelle aus zusammengepreßt wird. Aus den schon erwähnten Gründen hat sich diese Nockenwelle nicht bewährt. Anstelle einer abschnittsweisen Aufweitung der Hohlwelle von innen ist es auch bekannt (DE-OS 33 23 640), die Bohrungslaibung der Nocken mit radialen Vorsprüngen auszustatten und den Durchmesser der Hohlwelle so zu wählen, daß diese Nocken ohne besonderen Kraftaufwand aufgeschoben und positioniert werden können, worauf mit einem durch die Hohlwelle durchzuziehenden Dorn diese Welle über ihre gesamte Achslänge aufgeweitet wird. Die hier eingesetzten Hohlwellen besitzen aus Stabilitätsgründen eine nicht unerhebliche Wandstärke, so daß für ihre Aufweitung, ob diese nun abschnittsweise oder über die ganze Länge vorgesehen ist, beachtliche Umformkräfte aufgewendet werden müssen, die auch die Hohlwelle in ihrer Ausgangsgeometrie beeinflussen. Dies ist insofern nachteilig, als immer mehr dazu tendiert wird, die durch Sintern gewonnenen außerordentlich maßhaltigen Nocken ohne weitere Oberflächenbearbeitung zu verwenden, was aber voraussetzt, daß eine in ihrer Geometrie einwandfreie Hohlwelle vorgegeben ist.

Weiterhin wurde eine Nockenwelle bekannt (DE-OS 31 28 552), die eine tangentiale Verstellung des Nockens gegenüber der Welle ermöglicht. Auch hier ist der Nocken als getrennt gefertigter Bauteil auf der Welle mittels einer Hülse mit Preßsitz befestigt, die eine dem Durchmesser der Welle angepaßte zylindrische Bohrung und eine kegelstumpfförmige Außenform aufweist, der wiederum eine gleichartige konische Bohrung in dem zugeordneten Nocken entspricht, wobei im jeweiligen Nocken ein in dessen konische Bohrung im Bereich ihres größten Durchmessers einmündender Drucköanschluß vorgesehen ist. In der Welle ist neben dem jeweiligen Nocken ein weiterer Druckölanschluß vorgesehen, der über einen Druckölkanal zur Innenbohrung der Hülse führt. Aufgrund dieser Maßnahme treten beim Lösen des Verbundes zwischen Welle einerseits und Hülse mit Nocken andererseits, wenn Druck auf den Druckölanschluß gegeben wird, keine Achsialkräfte, also in Richtung der Welle wirkende Kräfte auf, so daß nach dem Lösen von Nocken mit Hülse dieser verdreht, also in tangentialer Richtung verstellt werden kann, ohne daß irgendwelche zusätzlichen unerwünschten Verstellungen auftreten, die anschließend wieder rückgängig gemacht werden müßten. Es wird so ein neuerliches Aufziehen des Nockens auf die Hülse eingespart.

Schlußendlich ist noch zu erwähnen, daß es bekannt ist (DE-OS 21 59 264), einen Flansch mit einer Nabe zu verbinden durch spanabhebendes Aufpressen unter gegenseitiger Verschiebung des mit einer Verzahnung versehenen Flansches auf eine Tragschulter der Nabe. Die Nabe hat im Vergleich zum Flansch eine kurze axiale Länge, wobei auf der Nabe nur ein Flansch angeordnet ist.

Eine Nockenwelle ist ein Maschinenbauelement besonderer Art insofern, da sie bei betriebsmäßigem Einsatz sehr extrem dynamischen Beanspruchungen unterworfen ist, so daß bislang alle bekanntgewordenen Nockenwellen eine materialschlüssige und/oder formschlüssige Verbindung zwischen Welle oder Nocken besitzen. Soll der verdrehsichere Halt der Nocken auf der Welle ausschließlich über einen Preßsitz erzielt werden, so muß der dafür vorgesehene Preßverband sehr stark sein, was zu außerordentlich hohen statischen Belastungen des Nokkens führt, denen in Betrieb noch zusätzliche die dynamischen Belastungen überlagert werden. Belastungen dieser Art vermögen Nocken, die durch Sintern hergestellt worden sind, auf die Dauer nicht ohne Schaden aufzunehmen, zumindest nicht gesinterte Nocken nach dem heutigen Stand der Fertigungstechnik und den heute zur Verfügung stehenden Materialien für Sinterzwecke.

Hier setzt nun die Erfindung ein, die darauf abzielt, einerseits für die Fertigung der Nockenwelle gesinterte Nocken verwenden zu können, andererseits die nötige Radialpressung zwischen Nocke und Rohr nur so groß werden zu lassen, daß für den gesinterten Nocken auch auf Dauer nur aufnehmbare Belastungen auftreten und trotzdem zwischen Welle und Nocken ein verläßlicher und sicherer Halt hergestellt ist. Die Lösung dieser erfindungsgemäßen Aufgabe gelingt durch die Merkmale der Patentansprüche 1 und 4. Die Herstellung der wulstartigen Materialverdrängung durch Rollen oder Walzen beansprucht die Hohlwelle nur in geringem Maße, so daß die Hohlwelle keine wesentliche Deformation bzw. Verformung erleidet; durch die Wülste, die durch die Materialverdrängung durch Rollen oder Walzen entstehen, werde Freiräume gebildet, welche die beim Aufschieben des Nockens sich bildenden Späne aufnehmen. Sind die durch die Materialverdrängung gebildeten Wülste zueinander parallel, so wirkt auf den aufzuschiebenden Nocken eine variierende Reaktionskraft, deren jeweilige Größe abhängt davon, ob die Stirnkante des nach innen vorstehenden Vorsprunges einen solchen Wulst anschneidet bzw. durchschneidet oder sich in einem Freiraum zwischen zwei benachbarten Wülsten befindet. Eine zweckmäßige Ausgestaltung der Erfindung liegt darin, daß die durch Materialverdrängung gefertigten umlaufenden Wülste nach Art eines Gewindes eine Steigung aufweisen, da dann beim Aufschieben des Nockens auf diesen eine konstante Reaktionskraft wirkt.

Um die Erfindung zu veranschaulichen, wird sie anhand der Zeichnung näher erläutert. Es zeigen:

Fig. 1     einen Abschnitt einer Nockenwelle mit zwei Nocken in Schrägsicht;

Fig. 2     die Ansicht eines Nockens für die Nockenwelle nach Fig. 1 in einem gegenüber dieser Figur vergrößerten Maßstab und

Fig. 3     eine Seitensicht des Nockens nach Fig. 2;

Fig. 4     einen Längsschnitt eine Nockenwelle, wobei jener Augenblick des Fertigungsvorganges hier veranschaulicht ist, bei welchem der Nocken auf den Bereich mit dem vergrößerten Durchmesser aufgeschoben wird;

Fig. 5     den aufgeschobenen Nocken bei einer Welle nach Fig. 4;

Fig. 6     ein Detail aus Fig. 4 in vergrößertem Maßstab und

Fig. 7     die Ansicht und den Teilschnitt gemäß der Linie VII - VII in der Detaildarstellung nach Fig. 6.

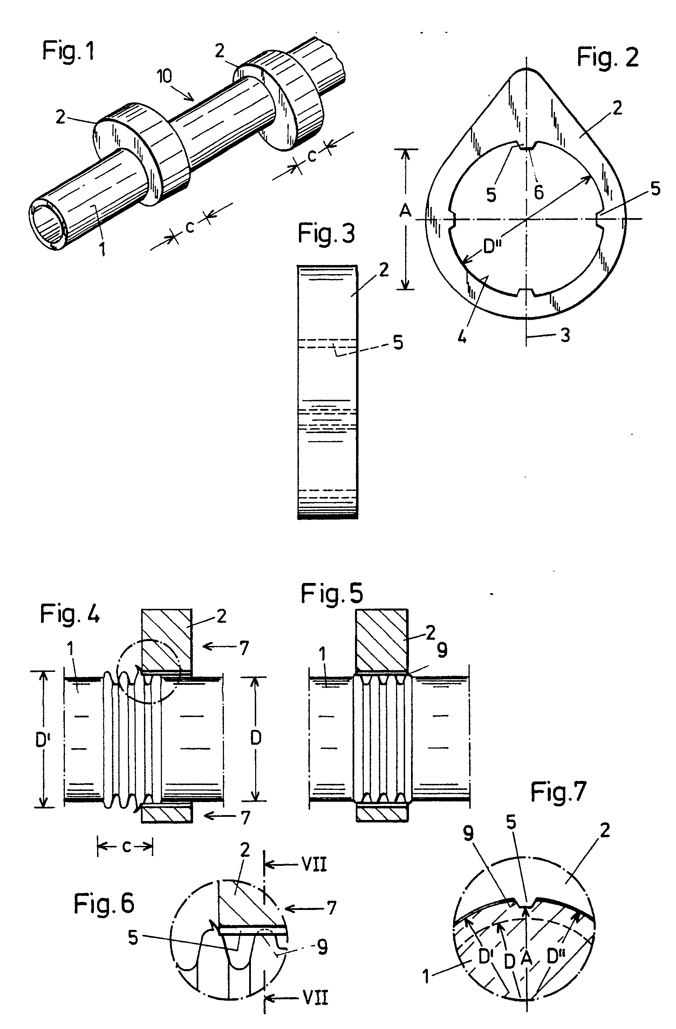

Die Nockenwelle 10 nach Fig. 1 besteht aus der durch ein Rohr gebildeten Welle 1 und den auf dieser Welle 1 befestigten Nocken 2, die voneinander in Achsrichtung der Welle 1 distanziert sind und die gegeneinander darüberhinaus noch winkelversetzt sind, wie es der jeweiligen Phasenlage der zu betätigenden Motorelemente der Verbrennungskraftmaschine entspricht, für die die Nockenwelle 10 vorgesehen ist.

Fig. 2 veranschaulicht einen Nocken 2 in einem gegenüber Fig. 1 vergrößerten Maßstab in Ansicht. Der Nocken 2 bzw. seine Außenkontur ist bezüglich der Symmetrieachse 3 symmetrisch. Die Aussparung 4 ist, was ihre Umfangskontur betrifft, korrespondierend zum Querschnittsprofil der Welle 1 ausgebildet. Was ihr Durchmesser $D''$ betrifft, so wird das nachstehend noch im einzelnen erörtert werden. Die Ausnehmung 4 besitzt hier vier radial auskragende Vorsprünge 5, die sich über die ganze achsiale Länge des Nockens bzw. der Ausnehmung 4 erstrecken. Im gezeigten Ausführungsbeispiel hat dieser Vorsprung 5 einen im wesentlichen rechteckigen Querschnitt, andere Querschnittsformen sind denkbar und möglich. Beim gezeigten Ausführungsbeispiel nach Fig. 2 sind vier Vorsprünge 5 veranschaulicht. Es liegt im Rahmen der Erfindung, über den Umfang der Ausnehmung 4 eine andere Anzahl solcher Vorsprünge 5 vorzusehen, zweckmäßig in gleichen Winkelabständen. Der Nocken 2 ist gesintert, also auf pulvermetallurgischem Wege hergestellt.

Das Rohrstück, das als Nockenträger für die Herstellung der Nockenwelle 10 dient, besitzt einen Außendurchmesser D, der um etwas kleiner ist als der Abstand A der inneren Fläche 6 der hier einander diametral gegenüberliegenden Vorsprünge 5 (Fig. 2), so daß der Nocken 2 auf die Welle aufschiebbar ist, und zwar ohne besonderen Kraftaufwand, und zwar in jenem Bereich, der diesen Durchmesser D besitzt. Soll nun der Nocken 2 auf der Welle 1 im Bereich C positioniert werden (Fig. 4), so wird in diesem Bereich das als Welle 1 dienende Rohr z.B. aufgeweitet, und zwar so weit, daß der Außendurchmesser D′ dieser Ausweitung im Bereich C ein solches Maß erhält, das etwas kleiner (z.B. 0,1 mm) ist als D″, aber deutlich größer als A (z.B. 0,8 mm). Der Abschnitt C mit dem erweiteren Durchmesser D′ wird dadurch gebildet, daß hier spanlos umlaufende Wülste bzw. Erhebungen auf das Rohr oder die Welle aufgewalzt oder aufgerollt werden, wie dies bei der Herstellung von Gewinden bekannt ist. Diese Wülste bzw. Erhebungen können umfangsgeschlossen umlaufen oder mit einer Steigung, wie ein Gewinde versehen sein. Diese Wülste bzw. Erhebungen sind mit großer Maßenauigkeit und hoher Oberflächengüte herstellbar, und zwar mit einem ungebrochenen Faserverlauf. Dieser Bereich C mit dem vergrößerten Durchmesser D′ wird hier also durch Druckumformung erzielt. Auf den so aufgeweiteten Bereich C (Fig. 4) wird nun der Nocken 2 mit entsprechender Winkelpositionierung mittels eines geeigneten, hier nicht näher dargestellten Werkzeuges aufgepreßt (Pfeil 7), wobei aufgrund der beschriebenen Geometrie (Fig. 7) zwischen den hier korrespondierenden Teilen der Vorsprung 5 wie ein Hobel sich eine Nut 9 spanabhebend formt. Das in Fig. 4 eingekreiste Detail ist in Fig. 6 in einem vergrößerten Maßstab dargestellt. Der Vorspurng 5 stellt seine ihn aufnehmende Nut 9 spanabhebung selbst her. Fig. 5 veranschaulicht den Aufpreßvorgang und zeigt den Nocken 2 in seiner vorgesehenen Lage. Ist der Nocken 2 in seiner vorgesehenen Lage angelangt, so sitzt er auf dem erweiterten Bereich C sicher und fest. Durch das spanbildende "Aufschneiden" (Aufräumen) des harten Nockens mittels der scharfkantigen Schneiden 6 wird sowohl eine Verspannung der Nocke zum Rohr erzielt (entspricht der Wirkung nach einer Preßpassung, die partiell auf die vorhandene Anzahl Schneiden wirkt), als auch eine sehr große Sicherheit gegen Verdrehung mittels der formschlüssigen Verkeilung der Schneiden, die beim Aufpressen spanabhebend die Nuten 9 formen. Durch den großen zulässigen Toleranzbereich der zu befestigenden Teile (jeder Nocken formt sich sozusagen seinen eigenen Weg und nimmt aus diesem Grunde sein "individuelles Spanvolumen" von dem ausgeweiteten Bereich C) werden wesentliche Vorteile gegenüber anderen Nockenwellen erreicht:
- hohe Verdrehsicherheit;
- geringere Beanspruchung des Nockenmaterials, die auch von einem gesinterten Nocken sicher und dauerhaft ertragen werden kann;
- wirtschaftliche Fertigung der zu befestigenden Einzelkomponenten;
- wirtschaftliches Fügeverfahren.

In der Regel werden auf der Welle 1 mehrere Nocken 2 (Fig. 1) angeordnet. Bei der Herstellung einer solchen Nockenwelle 10 wird wie folgt vorgegangen: Ein erster Abschnitt C wird aufgeweitet und der vorbereitete Nocken aufgepreßt; dann wird ein zweiter Abschnitt C aufgeweitet und der nächste Nocken mit entsprechender Winkelpositionierung aufgepreßt und so setzt sich dieses Wechselspiel fort, bis alle Nocken auf der Welle 1 angeordnet sind.

In der Zeichnung ist gezeigt, daß sich der Bereich mit den umlaufenden Wülsten bzw. Erhebungen nur über einen geringen Längenabschnitt C der Welle 1 erstreckt. Es liegt im Rahmen der Erfindung, solche Erhebungen oder Wülste über die gesamte Länge der Welle 1 aufzurollen oder aufzuwalzen und dann die Nocken 2 einzeln in ihre vorgesehene winkelgerechte Position zu pressen. Das ist hier deswegen möglich, weil die Spanbildung bei der Herstellung der Nut 9 laufend unterbrochen wird, so daß in kurzen Abständen stets die Schneidkante freigestellt wird.

In allen beschriebenen Fällen erhält der Nokken 2 auf dem für seine Aufnahme vorgesehenen Bereich oder Abschnitt C mit einem gegenüber den restlichen Abschnitten der Welle 1 vergrößerten Durchmesser D′ einen kraft- und formschlüssigen Halt, wobei der Formschluß absolut spielfrei ist, da der eine Teil dieser Paarung sich sein Gegenstück sozusagen selbst schafft.

Bei der serienmäßigen Herstellung solcher Nockenwellen 10 können zweckmäßigerweise ident ausgebildete Nocken 2 verwendet werden, also Nocken, die nicht nur hinsichtlich ihrer Umfangskontur übereinstimmen, sondern auch hinsichtlich der Größe, Lage und Anzahl der Vorsprünge 5 in der Ausnehmung 4. Bei der Montage werden dann die Nocken 2 winkelmäßig gegeneinander versetzt aufgeschoben, um so die notwendige und erforderliche Phasenlage zu erreichen. Dabei wird an der Welle 1 vorerst ein erster Bereich C mit vergrößertem Durchmesser D′ hergestellt und dann wird der zugehörige Nocken aufgepreßt, worauf ein zweiter Bereich C mit vergrößertem Durchmesser D′ hergestellt und der nächste Nocken auf diesen Bereich aufgepreßt wird, und in der weiteren Folge wird das Aufweiten der Welle und das jeweilige anschließende Aufpressen des Nockens in wechselnder Folge vorgenommen.

Die vorstehend geschilderte Konstruktion eignet sich besonders für Nocken, die im Sinterverfahren hergestellt worden sind. Es können aber auch Nocken verwendet werden, die in anderer Weise hergestellt sind. Gesinterten Nocken ist jedoch deswegen der Vorrang einzuräumen, da sie einfach, billig und mit großer Maßhaltigkeit erzeugt werden können.

Ein besonderer Vorteil der erfindungsgemäßen Maßnahme liegt auch darin, daß das Wellenrohr keiner besonderen Bearbeitung bedarf, von den erwähnten Aufweitungen abgesehen, und die vorgefertigten Teile (Welle 1 und Nocken 2) bei normaler Raumtemperatur fertig montiert werden können.

**Ansprüche**

1. Nockenwelle zur Steuerung von Ventilen bei verbrennungskraftmaschinen mit einer Welle (1) und mindestens einem auf die Welle (1) aufgeschobenen und mit ihr verbundenen Nokken (2), der eine Ausnehmung (4) zur Aufnahme der Welle (1) besitzt, und diese Ausnehmung (4) mindestens einen radial nach innen vorstehenden Vorsprung aufweist, der in eine dazu korrespondierende Nut (9) in der Welle (1) eingreift, dadurch gekennzeichnet, daß die Welle (1) in an sich bekannter Weise in jenem Bereich (C), an welchem der Nocken (2) vorzusehen ist, zumindest abschnittweise einen gegenüber den anderen Bereichen der Welle (1) vergrößerten Durchmesser (D') aufweist, und der Bereich (C) mit vergrößertem Durchmesser (D') zur Aufnahme des Nockens (2) durch eine, auf der Welle umlaufende, durch Rollen oder Walzen gefertigte, wulstartige Materialverdrängung gebildet ist und daß der Nacken (2) auf den Bereich (C) der Welle (1) mit dem vergrößerten Durchmesser (D') unter spanabhebender Formung der Nut (9) durch den Vorsprung (5) in der Ausnehmung (4) des Nockens (2) aufgeschoben ist.

2. Nockenwelle nach Anspruch 1, dadurch gekennzeichnet, daß die durch Materialverdrängung gefertigten umlaufenden Wülste nach Art eines Gewindes eine Steigung aufweisen.

3. Nockenwelle nach Anspruch 1, dadurch gekennzeichnet, daß der Nocken (2) in an sich bekannter Weise durch Sintern hergestellt ist.

4. Verfahren zur Herstellung einer Nockenwelle mit mehreren Nocken (2) nach den Ansprüchen 1 bis 3, wobei mindestens ein Nocken (2) auf die Welle (1) aufgeschoben und mit ihr verbunden wird, wobei der Nocken mit einer Ausnehmung (4) zur Aufnahme der Welle (1) versehen wird, die mindestens einen radial nach innen vorstehenden Vorsprung aufweist, der in eine dazu Korrespondierende Nut (9) in der Welle (1) eingreift, dadurch geKennzeichnet, daß an der Welle (1) ein erster Bereich (C) mit vergrößertem Durchmesser (D) durch eine auf der Welle umlaufende, durch Rollen oder Walzen gefertigte wulstartige Materialverdrängung hergestellt und dann der zugehörige Nacken (2) unter spanabhebender Formung der Nut (9) aufgepreßt wird, worauf ein zweiter Bereich (C) mit vergrößertem Durchmesser (D) hergestellt und der nächste Nocken (2) in dieser Weise auf diesen Bereich aufgepreßt wird und in weiterer Folge abschnittsweise Vergrößerung des Durchmessers der Welle (1) und anschließendes Aufpressen des Nockens (2) in wechselnder Folge vorgenommen wird.

**Claims**

1. A camshaft for controlling valves in internal combustion engines, comprising a shaft (1) and at least one cam (2), which is pushed onto the shaft (1) and connected therewith and comprises a recess (4) far receiving the shaft (1), said recess (4) comprising at least one radially inwardly extending protection, which engages in a corresponding groove (9) in the shaft (1), characterised in that, in the region (C) in which the cam (2) is to be arranged, the shaft (1) comprises in a manner known per se a diameter (D') which is enlarged at least in sections relative to the other regions of the shaft (1) and the region (C) with the enlarged diameter (D') is formed by a bead-like material displacement which runs around the shaft (1) and is produced by rollers or cylinders, and the cam (2) is pushed onto the region (C) of the shaft (1) with the enlarged diameter (D') with a cutting shaping of the groove (9) by the projection (5) in the recess (4) of the cam (2).

2. A camshaft according to claim 1, characterised in that the circumferential beads formed by material displacement have a pitch in the manner of a thread.

3. A camshaft according to claim 1, characterised in that the cam (2) is manufactured in a manner known per se by sintering.

4. A method for manufacturing a camshaft having a plurality of cams (2) according to claims 1 to 3, at least one cam (2) being pushed onto the shaft (1) and being connected therewith, the cam being provided with a recess (4) for receiving the shaft (1) having at least one radially inwardly extending projection, which engages in a corresponding groove (9) in the shaft (1). characterised in that a first region (C) with an enlarged diameter (D) is formed on the shaft (1) by a bead-like material displacement which runs around the shaft (1) and is produced by rollers or cylinders, and then the associated cam (2) is pushed onto the shaft with a cutting shaping of the groove (9), whereupon a second region (C) with an enlarged diameter (D) is formed and the next cam (2) is pushed in this manner onto said region, and this process is repeated with the diameter of the shaft (1) being enlarged in sections and the cam (2) being pressed onto the shaft (1) in alternating sequence.

**Revendications**

1. Arbre à cames pour la commande de soupapes de moteurs à combustion interne, comprenant arbre (1) et, au moins, une came (2) enfoncée sur l'arbre (1) et reliée à celui-ci, qui possède un évidement (4) pour la réception de l'arbre (1), lequel évidement (4) présente au moins une saillie avançant radialement vers l'intérieur, qui s'engage dans une rainure correspondante (9) de l'arbre (1), caractérisé en ce que l'arbre (1) présente dans cette région (c), dans laquelle la came (2) est à prévoir, un diamètre supérieur (D'), au moins par segments, à celui des autres régions de l'arbre (1) et en ce que la région (C) de plus grand diamètre (D') pour la réception de la came (2) est constituée par un déplacement de matière en forme de bourrelets réalisé au moyen de galets ou de cylindres sur tout le pourtour de l'arbre et en ce que la came (2) est enfoncée dans la région (C) de l'arbre (1) de plus grand diamètre (D'), en même temps que la rainure (9) est usinée par enlèvement de copeaux par la saillie (5) de l'évidement (4), de la came (2).

2. Arbre à cames selon la revendication 1, caractérisé en ce que les bourrelets circulaires obtenus par déplacement de matière présentent un pas, à la manière d'un filetage.

3. Arbre à cames selon la revendication 1, caractérisé en ce que la came (2) est réalisée, de manière en soi connue, par frittage.

4. Procédé de fabrication d'un arbre à cames comportant plusieurs cames (2) selon les revendications 1 à 3, dont au moins une came (2) est enfoncée sur l'arbre (1) et reliée à celui-ci, la came étant pourvue d'un évidement (4) pour la réception de l'arbre (1), qui présente au moins une saillie s'avançant radialement, vers l'intérieur qui est en prise avec une rainure (9) correspondante de l'arbre (1), caractérisé en ce qu'il est réalisé sur l'arbre (1) une première région (C) de plus grand diamètre (D) au moyen d'un déplacement de matière en forme de bourrelets entourant l'arbre, qui est obtenu au moyen de galets et de cylindres et en ce que la came (2) correspondante est ensuite emmanchée par pression, en usinant la rainure (9) par enlèvement de copeaux, à la suite de quoi il est réalisé une deuxième région de plus grand diamètre (D) et la came suivante (2) est enfoncée de cette manière dans cette région et il est procédé par la suite à une augmentation par segments du diamètre de l'arbre (1) en alternance avec l'emmanchement par pression consécutif de la came (2).

Fig.1

Fig. 2

Fig. 3

Fig. 4

Fig.5

Fig. 6

Fig.7